# EUROPÄISCHE PATENTANMELDUNG

(11) **EP 2 390 527 A2**
(43) Veröffentlichungstag der Anmeldung: **30.11.2011**
(21) Anmeldenummer: 11162969.7
(22) Anmeldetag: 19.04.2011
(51) Int. Cl.: F16F 9/32

(54) **Schwingungsdämpfer**

(30) Priorität: 25.05.2010 DE 102010029252
(71) Anmelder: ZF Friedrichshafen AG, 88038 Friedrichshafen (DE)
(72) Erfinder: Krawczyk, Anton, 51570, Windeck (DE); Holtmann, Guido, 51570, Windeck (DE); Sydekum, Heinz, 97456, Dittelbrunn (DE); Herrmann, Uwe, 97074, Würzburg (DE); Schulte, Rudolf, 53773, Hennef (DE); Rösseler, Jörg, 53809, Ruppichteroth/Winterscheid (DE); Gelhausen, Ingo, 57539, Fürthen (DE); Hupperich, Volker-Oliver, 53757, Sankt Augustin (DE)

(57) **Zusammenfassung**

Schwingungsdämpfer, umfassend einen Zylinder, in dem ein an einer Kolbenstange befestigter Kolben eine translatorische und eine rotatorische Relativbewegung zum Zylinder ausführt, wobei der Kolben über ein axiales Befestigungsmittel an der Kolbenstange fixiert ist, und zwischen dem Kolben und der Kolbenstange eine formschlüssige Verdrehsicherung ausgeführt ist.

## Beschreibung

Die Erfindung betrifft einen Schwingungsdämpfer gemäß dem Oberbegriff von Patentanspruch 1.

Bei einem Schwingungsdämpfer führt der Kolben zum Zylinder eine axiale Relativbewegung aus. Damit die Verbindung zwischen dem Kolben und der Kolbenstange nicht gelöst wird, kommt in der Regel eine Kolbenmutter zur Anwendung, die eine Vorspannung zwischen dem Kolben und der Kolbenstange bewirkt.

Insbesondere bei Schwingungsdämpfern an gelenkten Achsen führt der Kolben zusammen mit der Kolbenstange auch eine rotatorische Relativbewegung zum Zylinder aus. Auch bei Schwingungsdämpfern die schräg zur Schwenkachse eines Achsteils angeordnet sind, kann der Kolben eine rotatorische Relativbewegung zum Zylinder ausführen. Dadurch kann der Effekt auftreten, dass die Reibkraft zwischen der Innenwandung des Zylinders und dem Kolben ein Lösemoment auf die Kolbenmutter ausübt.

Es gibt, insbesondere bei Schwingungsdämpfern für gehobene Fahrzeugtypen, Lager, die z. B. eine Relativbewegung der Kolbenstange zum Fahrzeugaufbau ermöglichen, wie z. B. in der DE 37 16 819 A1 offenbart. Bei derartigen Schwingungsdämpfern tritt das Problem der Lösung des Kolbens nicht auf.

Als Alternativmaßnahme werden z. B. Kolbenmuttern verwendet, deren Gewindesteigung geringfügig zu einem Befestigungsgewinde der Kolbenstange abweicht. Beispielhaft wird auf die DE 34 29 473 A1 verwiesen.

In der DE 101 61 801 A1 wird als Lösung zur Kolbensicherung vorgeschlagen, dass die Kolbenmutter gezielt deformiert wird. Des Weiteren sind auch selbstsichernde Muttern bekannt.

Grundsätzlich tritt das geschilderte Problem des Lösens nicht nur bei geschraubten Kolbensicherungen auf, sonder auch bei Kolben, die auf der Kolbenstange vernietet sind. Das Befestigungsprinzip des Kolbens an der Kolbenstange ist untergeordnet, da jede Verdrehbewegung des Kolbens zur Kolbenstange die Lebensdauer des Schwingungsdämpfers verkürzt.

Die Aufgabe der vorliegenden Erfindung besteht darin, eine weitere Lösung für das aus dem Stand der Technik bekannte Problem der Kolbensicherung zu schaffen.

Erfindungsgemäß wird die Aufgabe dadurch gelöst, dass zwischen dem Kolben und der Kolbenstange eine formschlüssige Verdrehsicherung ausgeführt ist.

Der große Vorteil besteht einerseits darin, dass eine Verdrehbewegung des Kolbens zur Kolbenstange zuverlässig verhindert wird. Andererseits kann die axiale Vorspannkraft auf den Kolben reduziert wird. In Folge dessen lassen sich z. B. kleinere Kolbenmutterdurchmesser verwenden.

Um keine zusätzlichen Bauteil für die Verdrehsicherung einsetzen zu müssen, wird die Verdrehsicherung von einer Durchgangsöffnung im Kolben und einer Mantelfläche der Kolbenstange gebildet.

Grundsätzlich kann die formschlüssige Verbindung zwischen dem Kolben und der Kolbenstange über ein geometrisch beliebiges Profil erzeugt werden. Bevorzugt sind die Mantelfläche und die Durchgangsöffnung aber als ein Vielkeilprofil ausgeführt.

Um die Montage zu vereinfachen, ist das Vielkeilprofil der Kolbenstange in einem ganzzahligen Verhältnis zum Vielkeilprofil im Bereich der Durchgangsöffnung des Kolbens ausgeführt. Durch diese Maßnahme wird die Anzahl der möglichen Montagepositionen des Kolbens auf der Kolbenstange deutlich erhöht, wodurch sich eine Verkürzung der Montagezeiten einstellt.

In weiterer vorteilhafter Ausgestaltung beschränkt sich das Verdrehsicherungsprofil nur auf einem axialen Abschnitt der Durchgangsöffnung.

Des Weiteren ist vorgesehen, dass die Durchgangsöffnung im Kolben einen axialen Führungsabschnitt und einen Abschnitt für das Verdrehsicherungsprofil aufweist, wobei zwischen diesen beiden Abschnitten eine Montageschräge ausgeführt ist. Die Montageschräge führt dazu, dass der Kolben auch bei ungenauer Zuführung auf die Kolbenstange selbsttätig eine geringe Verdrehbewegung ausführt und infolge die Vorschlussverbindung geschlossen wird.

Gemäß einem Unteranspruch weist der Führungsabschnitt einen größeren Durchmesser aufweist als das Verdrehsicherungsprofil. Das Verdrehsicherungsprofil muss lediglich ein Verdrehmoment abstützen. Auf den Kolben wirksame Querkräfte, die deutlich größer sind, werden vom Führungsabschnitt übernommen.

Anhand der folgenden Figurenbeschreibung soll die Erfindung näher erläutert werden.

Es zeigt:
- Fig. 1: Teilansicht einer Kolbenstange
- Fig. 2: Kolben als Einzelteil
- Fig. 3: Montageeinheit Kolbenstange - Kolben
- Fig. 4: Teilausschnitt eines Schwingungsdämpfers

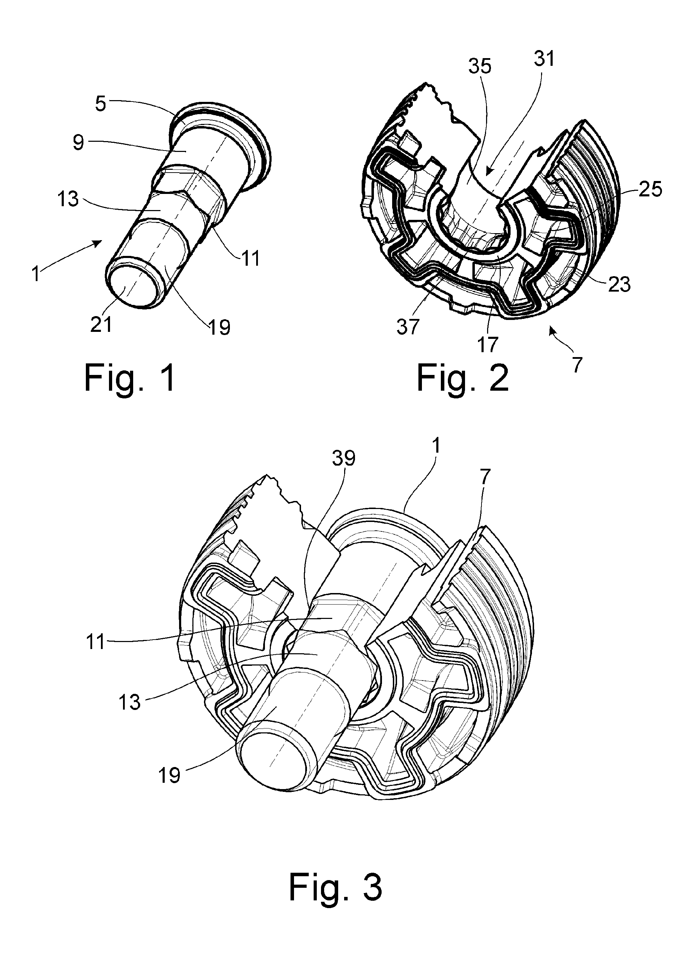

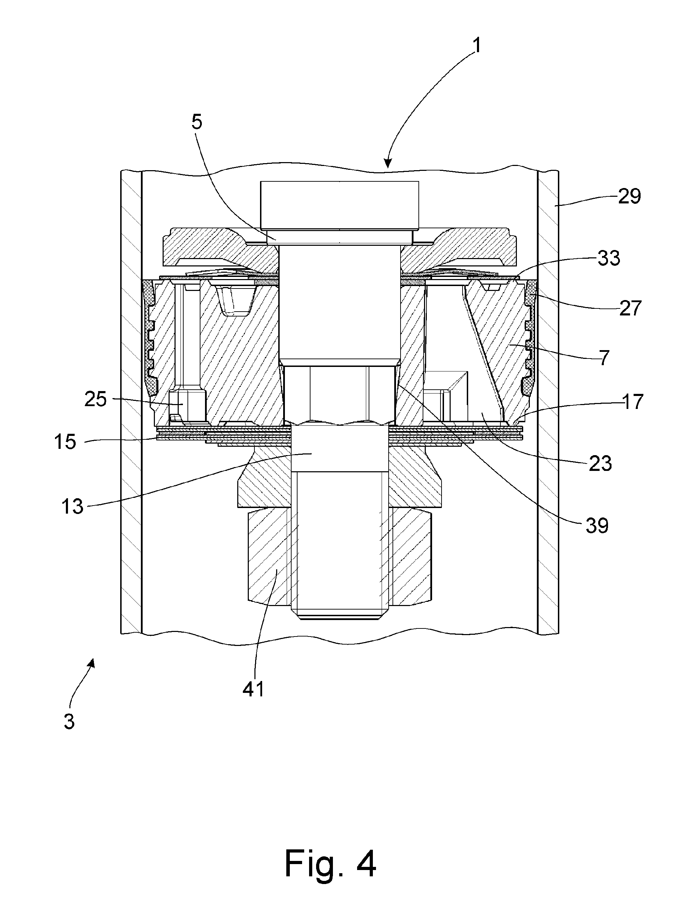

Die Figur 1 zeigt einen Abschnitt einer Kolbenstange für einen Schwingungsdämpfer, Fig. 4, beliebiger Bauform. Die Kolbenstange 1 verfügt über einen axial wirksamen Anschlagbund für einen Kolben 7 nach Fig. 2. Axial in Reihe zu dem Anschlagbund 5 verfügt die Kolbenstange 1 über einen Führungsabschnitt 9, der einen konstanten Durchmesser aufweist. Auf einer Mantelfläche der Kolbenstange 1 schließt sich ein Verdrehsicherungsprofil 11 in der Bauform eines Vielkeilprofils an, das deutlich kürzer ausgeführt ist als das der Führungsabschnitt 9. Ein sich dem Vielkeilproil 11 anschließender Zentrierabschnitt 13 dient zur radialen Positionierung von mindestens einer Ventilscheibe 15, Fig. 4, auf einer ersten Deckfläche 17 des Kolbens 7 nach Fig. 2. Ein Gewindeabschnitt 11 erstreckt sich von dem Zentrierabschnitt 13 bis zu einer Stirnfläche 21 der Kolbenstange 1.

Die Figur 2 zeigt einen Kolben 7 für den Schwingungsdämpfer 1 als Einzelteil. Die Ausgestaltung von Durchgangskanälen 23; 25 im Kolben 7 spielt für die Erfindung keine Rolle. Auf einer äußeren Umfangsfläche ist ein in Fig. 4 dargestellter Kolbenring 27 fixiert, der mit einer Innenwandung eines Zylinders 29 des Schwingungsdämpfers 3 in Reibkontakt steht. Auch bei optimierten Reibungsverhältnissen zwischen den beiden Reibungspartnern tritt eine Reibkraft auf.

Der Kolben 7 verfügt über eine axiale Durchgangsöffnung 31 zur Aufnahme der Kolbenstange 1 nach Fig. 1. Ausgehend von einer zweiten Deckseite 33, die im montierten Zustand, wie die Fig. 4 zeigt, in Richtung des Anschlagbundes 5weist, erstreckt sich ein Führungsabschnitt 35, der sich auf dem Führungsabschnitt 9der Kolbenstange 1 zentriert. Am Ende der Durchgangsöffnung 31 in Richtung der ersten Deckseite 17des Kolbens 7 verfügt die Durchgangsöffnung 31 im Kolben 7 auf einem axialen Abschnitt über ein Verdrehsicherungsprofil 37, ebenfalls als ein Vielkeilprofil ausgeführt. Der Führungsabschnitt 35 der Durchgangsöffnung 31 weist einen größeren Durchmesser auf als das Vielkeilprofil 37. Zwischen dem Führungsabschnitt 35 und dem Vielkeilprofil 37 innerhalb der Durchgangsöffnung 31 ist eine Montageschräge 39 ausgeführt. Bei der Montage auftretende Vibrationen reichen schon aus, um über die Montageschrägen 39 die Vielkeilprofile 11, 37 am Kolben 7 und an der Kolbenstange 1 ineinander greifen zu lassen.

In der Zusammenschau der Fig. 1 und 2 ist erkennbar, dass das Vielkeilprofil 11 der Kolbenstange 7 weniger Profilflächen aufweist als das Vielkeilprofil 37 innerhalb der Durchgangsöffnung 31. Im konkreten Fall ist das Vielkeilprofil 11 der Kolbenstange 1 als 6-Eck und das Vielkeilprofil 37 der Durchgangsöffnung 31 als 12-Eck ausgeführt, also das Vielkeilprofil 11 der Kolbenstange 1 in einem ganzzahligen Verhältnis zum Veilkeilprofil 37 des Kolbens 7 steht.

Die Figur 3 zeigt die Baueinheit Kolbenstange 1 - Kolben 7, wobei die beiden Vielkeilprofile 11, 37 der Kolbenstange 1 und des Kolbens 7 in formschlüssigem Eingriff stehen, so dass von der Durchgangsöffnung 31 im Kolben 7 und der Mantelfläche der Kolbenstange 1 eine Verdrehsicherung gebildet wird. Diese Verdrehsicherung ist unabhängig von einer Vorspannung, die z. B. von einer Kolbenmutter 41, Fig. 4, auf dem Gewindeabschnitt 19 erzeugt wird.

### Bezugszeichenliste

- 1: Kolbenstange
- 3: Schwingungsdämpfer
- 5: Anschlagbund
- 7: Kolben
- 9: Führungsabschnitt (Kolbenstange)
- 11: Verdrehsicherungsprofil (Kolbenstange)
- 13: Zentrierabschnitt (Kolbenstange)
- 15: Ventilscheibe
- 17: erste Deckfläche
- 19: Gewindeabschnitt
- 21: Stirnfläche
- 23, 25: Durchgangskanäle
- 27: Kolbenring
- 29: Zylinder
- 31: Durchgangsöffnung
- 33: zweite Deckseite
- 35: Führungsabschnitt (Kolben)
- 37: Verdrehsicherungsprofil (Kolben)
- 39: Montageschräge
- 41: Kolbenmutter

## Patentansprüche

1. Schwingungsdämpfer (3), umfassend einen Zylinder (29), in dem ein an einer Kolbenstange (1) befestigter Kolben (7) eine translatorische und eine rotatorische Relativbewegung zum Zylinder (29) ausführt, wobei der Kolben über ein axiales Befestigungsmittel (41) an der Kolbenstange (1) fixiert ist,
**dadurch gekennzeichnet,**
**dass** zwischen dem Kolben (7) und der Kolbenstange (1) eine formschlüssige Verdrehsicherung (11; 37) ausgeführt ist.

2. Schwingungsdämpfer nach Anspruch 1,
**dadurch gekennzeichnet,**
**dass** die Verdrehsicherung (11; 37) formschlüssig ausgeführt ist und von einer Durchgangsöffnung (31) im Kolben (7) und einer Mantelfläche der Kolbenstange (1) gebildet wird.

3. Schwingungsdämpfer nach Anspruch 2,
**dadurch gekennzeichnet,**
**dass** die Mantelfläche und die Durchgangsöffnung als ein Vielkeilprofil (11; 37) ausgeführt sind.

4. Schwingungsdämpfer nach Anspruch,
**dadurch gekennzeichnet,**
**dass** das Vielkeilprofil (11) der Kolbenstange in einem ganzzahligen Verhältnis zum Vielkeilprofil (37) im Bereich der Durchgangsöffnung (31) des Kolbens (7) ausgeführt ist.

5. Schwingungsdämpfer nach Anspruch 3,
**dadurch gekennzeichnet,**
**dass** sich das Verdrehsicherungsprofil (31) nur auf einem axialen Abschnitt der Durchgangsöffnung (31) beschränkt.

6. Schwingungsdämpfer nach Anspruch 2,
**dadurch gekennzeichnet,**
**dass** die Durchgangsöffnung (31) im Kolben (7) einen axialen Führungsabschnitt (35) und einen Abschnitt für das Verdrehsicherungsprofil (37) aufweist, wobei zwischen diesen beiden Abschnitten (35; 37) eine Montageschräge (39) ausgeführt ist.

7. Schwingungsdämpfer nach Anspruch 6,
**dadurch gekennzeichnet,**
**dass** der Führungsabschnitt (9; 35) einen größeren Durchmesser aufweist als das Verdrehsicherungsprofil (11; 37).
